# EUROPEAN PATENT APPLICATION

(11) **EP 4 096 311 A1**
(43) Date of publication of application: **30.11.2022**
(21) Application number: 20915046.5
(22) Date of filing: 24.01.2020
(51) Int. Cl.: H04W 56/00, H04W 72/04

(54) **TERMINAL**

(71) Applicant: NTT DOCOMO, INC., Chiyoda-ku Tokyo 100-6150 (JP)
(72) Inventor: HARADA, Hiroki, Tokyo 100-6150 (JP); TAKADA, Takuma, Tokyo 100-6150 (JP); NAGATA, Satoshi, Tokyo 100-6150 (JP)
(74) Representative: Hoffmann Eitle
(86) International application number: PCT/JP2020/002621
(87) International publication number: WO 2021/149256

(57) **Abstract**

A terminal including: a reception unit configured to receive, from a base station apparatus, configuration information of a time window for measurement based on an SSB; and a control unit configured to measure based on the SSB, wherein the configuration information includes, as a time length of the time window, a time length selected from a plurality of time lengths including a time length shorter than a predetermined time length, and wherein the control unit performs measurement based on the SSB within a time window of a time length included in the configuration information.

## Description

### [Technical Field]

The present invention relates to a terminal in a wireless communication system.

### [Background Art]

In NR (New Radio), a successor system to the Long Term Evolution (LTE) (also referred to as "5G"), technologies that satisfy requirements such as high capacity systems, high data transmission rate, low delay, simultaneous connection of multiple terminals, low cost, and power saving are being considered. In NR, use of high frequency bands such as 52.6-71 GHz or 24.25-71 GHz are also being considered.

In order to expand frequency bands, existing LTE systems support use of frequency bands (unlicensed bands, unlicensed carriers, unlicensed CCs) different from frequency bands (licensed bands) licensed to telecom carriers (operators). As the unlicensed bands, bands such as 2.4 GHz band, 5 GHz band, and 6 GHz band where Wi-Fi (trademark) or Bluetooth (trademark) can be used are assumed. In NR, the system supporting unlicensed bands is called NR-U system.

### [Prior art documents]

### [Non-patent document]

[Non-Patent Document 1] 3GPP TS 38. 331 V15. 8. 0(2019-12)
[Non-Patent Document 2] 3GPP TS 38. 133 V16. 1. 0(2019-09)
[Non-Patent Document 3] 3GPP TS 38. 215 V15. 5. 0(2019-06)

### [Summary of Invention]

### [Problem to be solved by the invention]

In NR, various functions and requirements for RRM (Radio Resource Management) measurement (hereinafter referred to as "measurement") are defined for securing mobility performance of user terminals (Non-patent Document 1 and Non-Patent Document 2) .

However, user terminals that conform to existing NR specifications that assume frequencies up to 52.6 GHz may not be able to properly perform measurement in high frequency band such as 52.6 to 71 GHz.

The present invention has been made in view of the foregoing points, and it is an object of the present invention to provide a technology, in a wireless communication system, in which a user terminal can properly perform measurement in the high frequency band.

### [Means for Solving Problems]

According to the disclosed technique, there is provided a terminal including: a reception unit configured to receive, from a base station apparatus, configuration information of a time window for measurement based on an SSB; and a control unit configured to perform measurement based on the SSB, wherein the configuration information includes, as a time length of the time window, a time length selected from a plurality of time lengths including a time length shorter than a predetermined time length, and wherein the control unit performs measurement based on the SSB within a time window of a time length included in the configuration information.

### [Effects of the Invention]

According to the disclosed technique, in a wireless communication system, a technique is provided which allows the user terminal to properly perform measurement in the high frequency band.

### [Brief Description of Drawings]

Fig. 1 is a diagram for explaining a wireless communication system according to an embodiment of the present invention;
Fig. 2 is a diagram for explaining a wireless communication system according to an embodiment of the present invention;
Fig. 3 is a diagram showing an example of bands;
Fig. 4 is a diagram for explaining a relationship between an SSC and a symbol/slot length;
Fig. 5 is a diagram for explaining a basic operation in a wireless communication system;
Fig. 6 is a diagram showing an example of SSB configuration;
Fig. 7 is a diagram showing a setting example of SMTC window and Gap;
Fig. 8 is a diagram for explaining a measurement gap and a timing advance;
Fig. 9 is a diagram for explaining deriveSSB-IndexFromCell tolerance;
Fig. 10 is a diagram for explaining Scheduling availability;
Fig. 11 is a diagram showing an example of a functional configuration of the base station apparatus 10 according to an embodiment of the present invention;
Fig. 12 is a diagram showing an example of a functional configuration of a user terminal 20 according to an embodiment of the present invention;
Fig. 13 is a diagram illustrating an example of the hardware configuration of the base station apparatus 10 or the user terminal 20 according to an embodiment of the present invention.

### [Mode for Carrying Out the Invention]

Hereinafter, embodiments of the present invention will be described with reference to the drawings. The embodiments described below are examples, and the embodiments to which the present invention is applied are not limited to the following embodiments.

In operating a wireless communication system according to an embodiment of the present invention, existing techniques are used as appropriate. The existing technology is, for example, an existing NR. The wireless communication system (the base station apparatus 10 and the user terminal 20) according to the present embodiment basically operates according to the existing specification (for example, Non-Patent Documents 1 to 3). However, in order to solve the problem in the case of using a high frequency band, the base station apparatus 10 and the user terminal 20 perform an operation that is not provided in the present specification. In the description of the embodiments which will be described later, operations not included in the existing provisions are mainly described. All the values described below are examples.

In embodiments of the present invention, the duplex method may be a TDD (Time Division Duplex) method, a FDD (Frequency Division Duplex) method, or any other method (e.g., Flexible Duplex, etc.).

In an embodiment of the present invention, "wireless parameter or the like being configured" may mean that a predetermined value is preconfigured or that a wireless parameter notified from the base station apparatus 10 or the user terminal 20 is configured.

### (System Configuration)

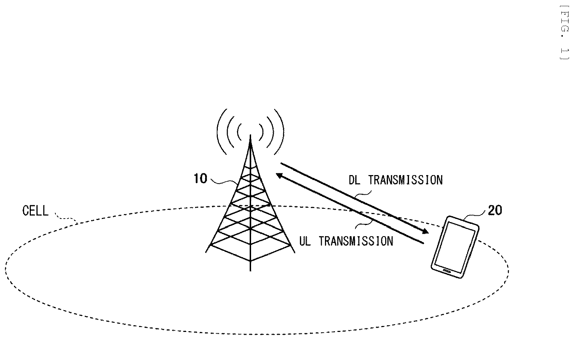

Fig. 1 is a diagram illustrating a wireless communication system according to an embodiment of the present invention. The wireless communication system in an embodiment of the present invention includes a base station apparatus 10 and a user terminal 20, as shown in FIG. 1. In FIG. 1, one base station apparatus 10 and one user terminal 20 are shown, but this is an example and may be more than one each. The user terminal 20 may be referred to as a "terminal."

The base station apparatus 10 is a communication device that provides one or more cells and performs wireless communication with the user terminal 20. The physical resources of the radio signal are defined in a time domain and a frequency domain.

For example, OFDM is used as the wireless access scheme. In the frequency domain, As subcarrier spacing (SCS), at least 15 kHz, 30 kHz, 120 kHz, and 240 kHz are supported. In addition, resource blocks are constructed by a predetermined number of consecutive subcarriers (e.g., 12) regardless of SCS.

The user terminal 20 detects an SSB (SS/PBCH block) and identifies an SCS for PDCCH and PDSCH based on PBCH included in the SSB when making the initial access.

In the time domain, a slot is configured by a plurality of OFDM symbols (e.g., 14 regardless of subcarrier spacing). Hereinafter, OFDM symbol is referred to as symbol. A slot is a scheduling unit. In addition, a subframe of 1 ms interval is defined, and a frame of 10 subframes is defined. The number of symbols per slot is not limited to 14.

As shown in FIG. 1, the base station apparatus 10 transmits control information or data in DL (Downlink) to the user terminal 20 and receives control information or data in UL (Uplink) from the user terminal 20. Both the base station apparatus 10 and the user terminal 20 are capable of beam forming to transmit and receive signals. Also, both the base station apparatus 10 and the user terminal 20 can apply communication by MIMO (Multiple Input Multiple Output) to DL or UL. The base station apparatus 10 and the user terminal 20 may both communicate via a SCell (Secondary Cell) and a PCell (Primary Cell) by a CA

### (Carrier Aggregation)

The user terminal 20 is a communication device, having a wireless communication function, such as a smartphone, a cellular phone, a tablet, a wearable terminal, a communication module for M2M (Machine-to-Machine), or the like. As shown in Fig. 1, the user terminal 20 utilizes various communication services provided by the wireless communication system by receiving control information or data in DL from the base station apparatus 10 and transmitting control information or data in UL to the base station apparatus 10.

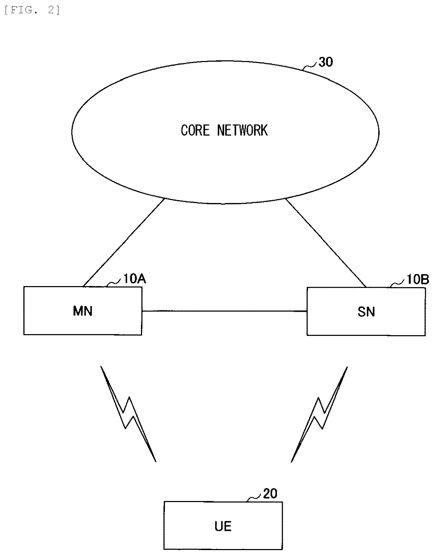

Fig. 2 shows an example of a configuration of a wireless communication system when NR-DC (NR-Dual connectivity) is executed. As shown in FIG. 2, a base station apparatus 10A serving as an MN (Master Node) and a base station apparatus 10B serving as an SN (Secondary Node) are provided. The base station apparatus 10A and the base station apparatus 10B are each connected to a core network. The user terminal 20 communicates with both the base station apparatus 10A and the base station apparatus 10B.

A cell group provided by the base station apparatus 10A that is an MN is called MCG (Master Cell Group), and a cell group provided by the base station apparatus 10B that is an SN is called SCG (Secondary Cell Group). The operation according to this embodiment may be performed in any one configuration of FIG. 1 and FIG. 2.

In the wireless communication system according to this embodiment, when an unlicensed band is used, an LBT (Listen Before Talk) is executed. The base station apparatus 10 or the user terminal 20 performs transmission when the LBT result is idle, and does not perform transmission when the LBT result is busy.

### (Frequency band)

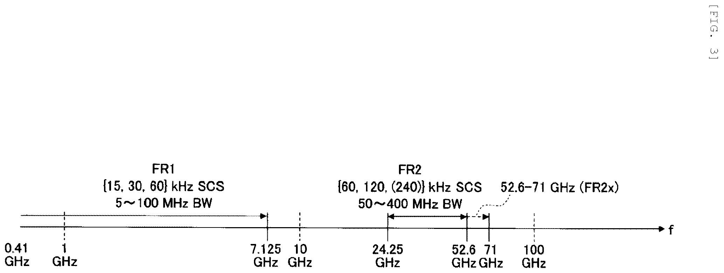

FIG. 3 illustrates an example of a frequency band used in an existing NR and a frequency band used in a wireless communication system according to this embodiment. There are two frequency bands for existing NRs (also referred to as frequency ranges): FR1 (0.41 GHz to 7.125) and FR2 (24.25 GHz to 52.6 GHz). As shown in FIG. 3, FR1 supports 15 kHz, 30 kHz, and 60 kHz as SCS and 5-100 MHz as bandwidth (BW). FR2 supports 60 kHz, 120 kHz and 240 kHz (SSB only) as SCS and 50-400 MHz as bandwidth (BW).

The wireless communication system in accordance with this embodiment assumes that a frequency band of 52.6 GHz to 71 GHz, which is not used in the existing NR, is used. In FIG. 3, for convenience, the frequency band 52.6 GHz to 71 GHz is referred to as FR2x. Also, in this embodiment, a frequency band of 24.25 GHz to 71 GHz may be used as an extended FR2.

Also, in this embodiment, as the frequency band expands as described above, a wider SCS than an existing SCS is used. For example, an SCS of 480 kHz or greater than 480 kHz is used for SSB and PDCH/PDSCH SCS. For example, SCS of 480 kHz may be used for SSB and SCS of 240 kHz may be used for PDCCH/PDSCH.

### (Problem)

As noted above, in this embodiment, an SCS (e.g., 480 kHz) wider than the existing FR2 SCS is used as an SCS in the 52.6 GHz-71 GHz or 24.25 GHz-71 GHz frequency bands.

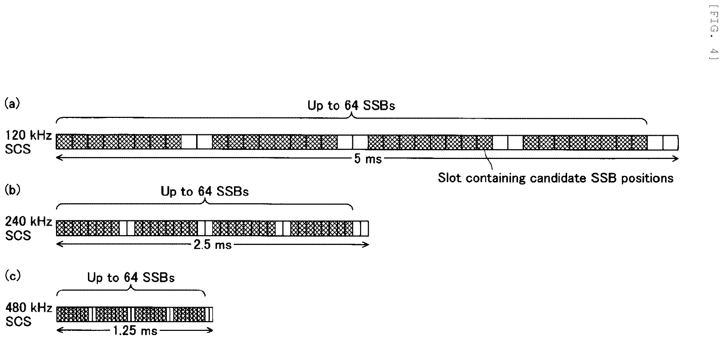

FIG. 4 is a diagram illustrating a problem when a wide SCS is used. Fig. 4(a) to Fig. 4(c) are diagrams in which up to 64 SSBs (64 SSBs with different indexes) are transmitted from the base station apparatus 10. In each view, a slot containing candidate symbols in which an SSB is placed is shown as shaded.

Fig. 4 (a) shows a case when SCS = 120 kHz. As shown in Fig. 4(b), when SCS is 240 kHz, the symbol length and slot length are 1/2 compared to the case shown in Fig. 4(a). Furthermore, as shown in Fig. 4(c), when SCS is 480 kHz, the symbol length and slot length are reduced to 1/4 compared to the example shown in Fig. 4(a). As described above, when the SCS becomes wide, a plurality of SSBs are arranged in shorter time intervals, so that the user terminal 20 using the parameters defined by the existing NR may not be able to properly measure the SSB or the like. Also, in order to avoid increased complexity of the user terminal 20 and difficulty of proper operation, it is necessary to relax RRM requirements of the existing NR specification.

Hereinafter, a technique will be described for solving the above-described problem and appropriately performing measurement.

### (Measurement)

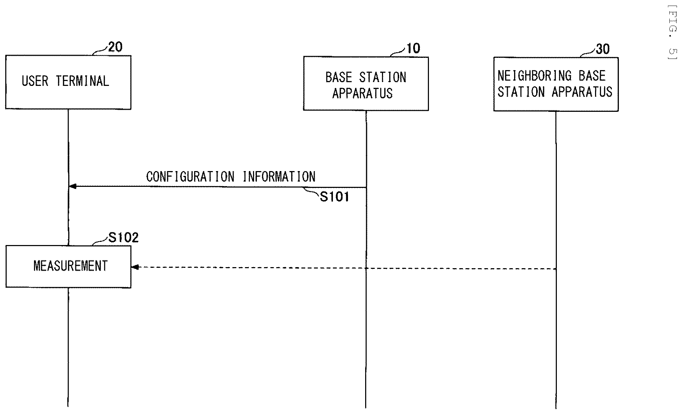

First, a basic example of the operation related to measurement in the wireless communication system according to the present embodiment will be described with reference to Fig. 5.

In S101, the user terminal 20 receives configuration information from the base station apparatus 10. The configuration information is, for example, an RRC message containing parameters for measurement.

In S102, the user terminal 20 performs measurement based on the configuration information (parameter for measurement) received in S101. In the example of Fig. 5, the measurement is performed by receiving an SSB (or CSI-RS) transmitted from a neighbor base station apparatus 30.

By performing the measurement, for example, the user terminal 20 can determine whether or not to handover to another cell. Further, when the user terminal 20 transmits the measurement result to the base station apparatus 10, the base station apparatus 10 can determine whether or not a CC is newly added at the time of CA.

In this embodiment, the user terminal 20 can perform both SSB-based measurement (measurement by receiving an SSB) and CSI-RS-based measurement (measurement by receiving a CSI-RS).

As a measurement target, the user terminal 20 can measure any of the following: RSRP (reference signal received power), RSRQ (reference signal received quality), SINR (signal-to-noise and interference ratio), which are described in detail in Non-Patent Document 3.

Examples of the configuration information transmitted from the base station apparatus 10 to the user terminal 20 in S101 include SMTC window duration, SS-RSSI-Measurement, deriveSSB-IndexFromCell, Max number of CSI-RS resources, MeasGapConfig(measurement gap configuration) and the like, for example. The contents thereof will be described in examples to be described later.

Hereinafter, a specific example of a technology for solving the above-described problem will be described as Example 1 and Example 2. The techniques described in Example 1 can be implemented in combination with any of the techniques described in Example 2.

### (Example 1)

In the Example 1, as a parameter for measurement transmitted from the base station apparatus 10 to the user terminal 20 (e.g., a parameter transmitted is S101 of Fig. 5), a parameter changed from a parameter defined in an existing NR standard is used, for example. Examples 1-1, 1-2, 1-3, and 1-4 will be described as concrete examples.

Examples of the above-described parameters for measurement include "SMTC window duration" in Example 1-1, "SS-RSSI-Measurement" in Example 1-2, "measurement gap" and "measurement gap timing advance" in Example 1-3, "CSI-RS-Resource-Mobility" in Example 1-4, and "deliveSSB-IndexFromCell" in Example 2-2.

### <Example 1-1>

In Example 1-1, it is possible to use a value shorter than that specified in the existing NR standard as a value of SMTC window duration. Note that SMTC window duration is an example of a parameter on time length for detection or measurement of SSB.

First, the SMTC window is described. SMTC window stands for SSB-based RRM Measurement Timing Configuration window. The user terminal 20 performs detection and measurement of an SSB within the SMTC window time interval when the SMTC window including an SMTC window duration is configured by the base station apparatus 10.

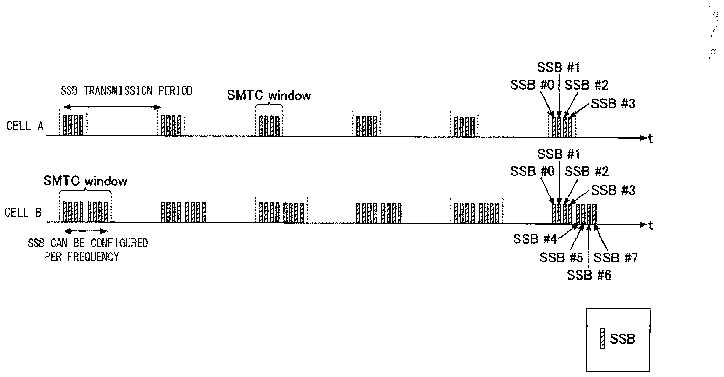

Referring to FIG. 6, the relationship between SSBs and the SMTC window is described. FIG. 6 shows that at cell A, SSBs are being transmitted at a certain transmission period, and at cell B, more SSBs than those of cell A are being transmitted at that transmission period. Similar to SSBs, the period of the SMTC window can be configured in the range of 5, 10, 20, 40, 80, and 160 ms, but need not be the same as an SSB transmission period. In the example shown in Fig. 6, in cell A, a transmission period the same as that for the SSB is configured for the SMTC window, while in cell B, a transmission period (a transmission cycle that is less frequent) larger than that for the SSB is configured for the SMTC window.

In addition, for the width of the SMTC window (SMTC window duration), in the existing NR specification, any value selected from 1, 2, 3, 4, and 5 ms can be configured. In the example shown in Fig. 6, cell B with more SSBs has a longer SMTC window duration than cell A.

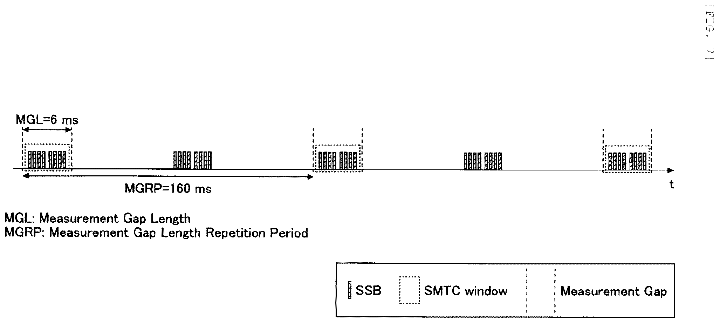

Fig. 7 shows an example in which a measurement gap is configured to the user terminal 20. The user terminal 20 performs measurement in the SMTC window and a time interval of the measurement gap.

As noted above, when, for example, a 480 kHz SCS is used in a wireless communication system as an SCS, the symbol length and slot length are shortened, and a total of 64 candidate SSB slot positions will be placed within a time interval of 1.25 ms, as shown in Fig. 4(c).

For example, in a cell of a measurement target, in a case where fewer than 64 SSBs (for example, 32 SSBs here) are placed in the first half of 1.25 ms interval (0.5125 ms), even if the minimum SMTC window duration (1 ms) in the existing specification is configured to the user terminal 20, the user terminal 20 must wait for the SSB, even though no SSB is transmitted, in nearly half of the SMTC window duration (1 ms) . This reduces time resources for data transmission and reception and makes the use of resources inefficient.

Accordingly, according to the Example 1-1, the base station apparatus 10 can configure a value (for example, 0.5 ms or 0.25 ms) of a time length shorter than 1 ms as the SMTC window duration to the user terminal 20. That is, the base station apparatus 10 can select a value of a time length shorter than 1 ms from a plurality of time length values. It may also be possible to configure a value (for example, 1.5 ms) that is longer than 1 ms and has a time granularity of 1 ms or less.

For example, in a cell to be measured (neighbor cell), 480 KHz is used as an SSB SCS, and 16 SSBs (detectable in 1.25/4 = 0.3125 msec interval) are transmitted in 5 msec period. At this time, for example, the base station apparatus 10 configures the user terminal 20 with 0.5 ms as a SMTC window duration and configures 5 ms as a period of the SMTC window. This allows the user terminal 20 to efficiently perform measurement of 16 SSBs.

In Example 1-1, while configurable values for the SMTC window duration are 1, 2, 3, 4, and 5 ms same as the existing NR specification, the base station apparatus 10 may not configure a value of long time length (e.g., 4 ms and 5 ms) to the user terminal 20 for detection of SSB using a wide SCS (e.g., 240 kHz or SCS wider than 240 kHz).

That is, the user terminal 20 determines that the base station apparatus 10 does not configure a value of long time length (for example, 4 ms and 5 ms) as the SMTC window duration. In other words, the user terminal 20 does not expect a value of long time length (e.g., 4 ms and 5 ms) being configured from the base station apparatus 20 as SMTC window duration.

### <Examples 1-2>

Next, Example 1-2 will be described. Example 1-2 is an example on values of parameters (measurementSlots, endSymbol) included in SS-RSSI-Measurement. SS-RSSI-Measurement is an example of a parameter that specifies the time position for RSSI measurement.

SS-RSSI-Measurement is configuration information including measurementSlots and endSymbol. As described in Non-Patent Document 3, the user terminal 20 calculates RSRQ from RSRP and RSSI (Received Signal Strength Indicator). The user terminal 20 calculates RSSI from received power of the number of symbols specified by endSymbol in each of the slots specified by measurementSlots (bitmap) in the SMTC window duration. MeasurementSlots is an example of a parameter that specifies a slot of RSSI measurement target. EndSymbol is an example of a parameter that specifies a symbol of RSSI measurement target.

The correspondence between the value of endSymbol and the symbol to be measured is described in Table 5.1.3-1 of Non-Patent Document 3 in existing NR. In the existing NR, the numbers of measurement target symbols are 0-1, 0-11, 0-5, or 0-7, depending on the value of endSymbol.

The length of the measurementSlots (bitmap) in the existing NR is the number of slots in the SMTC window duration, which is 80 at the maximum. The MSB in the measurementSlots (bitmap) corresponds to the first slot and the order of bits corresponds to the order of slots. The user terminal 20 measures RSSI in a slot corresponding to a bit of 1 in the measurementSlots (bitmap).

However, if a wide SCS such as 480 kHz is used, the number of slots in a 5 ms SMTC window would be 160 slots, so 80, the maximum value of the existing measurement slots, would be insufficient. Examples 1-2-1, 1-2-2, and 1-2-3 will be described as techniques for solving the problem.

### <Example 1-2-1>

In Example 1-2-1, the base station apparatus 10 can configure the user terminal 20 with measurementSlots having a bit length (e.g., 160 bits) longer than 80 bits, at the maximum.

For example, suppose that a 5 ms SMTC window is configured from the base station apparatus 10 to the user terminal 20 when 480 kHz is used as SCS in a cell of measurement target. In this case, the base station apparatus 10 configures 160-bit length measurementSlots to the user terminal 20. This allows the user terminal 20 to measure RSSI according to the configuration of measurementSlots in the SMTC window.

### <Example 1-2-2>

In Examples 1-2-2, a value greater than 14 symbols (e.g., 28) is used as the number of symbols per slot in a cell of measurement target. That is, in the cell, control signals and data are transmitted and received using a slot as a scheduling unit in which the number of symbols is N (where N is an integer larger than 14). Alternatively, the slot size as a scheduling unit may be 14 symbols, but the number of slots to be notified for each bit in the measurementslots may be 2 or more instead of 1.

For example, if SCS = 480 kHz and the number of symbols per slot is N = 28, the number of slots in the 5 m SMTC window is 80 slots, and the maximum value (80 bits) of measurementSlots in the existing NR standard can be applied.

In Example 1-2-2, the description of the symbol index of Table 5.1.3-1 of Non-Patent Document 3 is changed from the present description (0-1, 0-11, 0-5, 0-7) to, for example, 0-3, 0-7, 0-13, 0-23. According to the changed specification, the user terminal 20 determines the number of symbols corresponding to the value of endSymbol received from the base station apparatus 10 (for example, if endSymbol = 3, then RSSI measurement symbols = 0 to 23), and performs measurement of RSSI with corresponding symbols of the measurement target slot specified by the measurementSlots.

### <Example 1-2-3>

In Example 1-2-3, the bit length of measurementSlots is not changed from the existing NR specification. However, different from the existing NR specification, in Example 1-2-3, the bit length of the measurementSlots (time length of slots for the number of bits) may not be the same as the time length of the SMTC window. The bit length of the measurementslots (time length of slots for the number of bits) may be longer or shorter than the time length of the SMTC window.

For example, suppose that when SCS of a measurement target cell is 480 kHz, the base station apparatus 10 configures the user terminal 20 with an SMTC window of 5 ms (the time length of 160 slots) and also configures measurementSlots of 80 bits in length.

In this case, the time length of a slot group corresponding to the bit length of the measurementSlots is shorter than the time length of the SMTC window. For example, the user terminal 20 interprets the bitmap of measurementSlots (80 slots) as pointing to the first 80 slots in the SMTC window (160 slots) and performs RSSI measurements according to the bitmap in the first 80 slots.

More generally, the user terminal 20 interprets the bitmap of measurementSlots (X slots) as pointing to the first X slots in the SMTC window (Y slots (Y > X)) and performs RSSI measurements in the first X slots according to the bitmap. Measuring the first X slots is an example, and the last X slots of the Y slots may be measured, the middle X slots of the Y slots may be measured, or the other portions of the X slots in the Y slots may be measured.

### <Examples 1-3>

Next, Example 1-3 will be described. Example 1-3 is an example of measurement gap.

As described in the existing NR specification (Non-Patent Document 1 and 2), the base station apparatus 10 can configure the user terminal 20, as a measurement gap, with per-UE measurement gap (both FR1 and FR2 can be measured) as a measurement gap for each user terminal and per-FR measurement gap (measurement gap for measuring the frequency of FR1 and measurement gap for measuring the frequency of FR2 can be individually configured) as a measurement gap for each FR.

In the existing NR specification, as the gap length of the per-UE measurement gap, any one of 3, 4, and 6 ms can be configured, and as the repetition period, any one of 20, 40, 80, and 160 ms can be configured.

As the gap length of the per-FR measurement gap for FR2, any one of 1.5, 3.5, and 5.5 ms can be configured, and as a repetition period, any one of 20, 40, 80, and 160 ms can be configured.

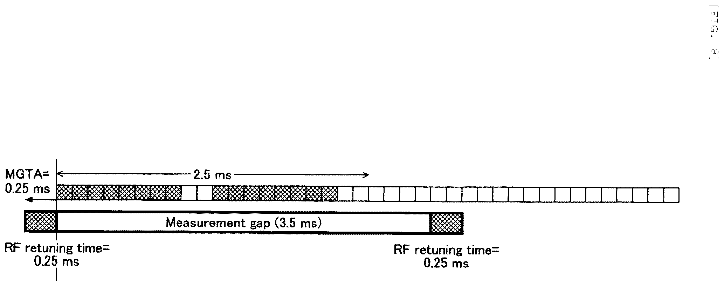

Since a predetermined time interval before and after the measurement gap is used for RF retuning, the user terminal 20 cannot use the interval for measurement. Therefore, as shown in Fig. 8, a function (Measurement gap timing advance) is provided in which, by shifting the start timing of the measurement gap forward, SSB can be used for measurement without omission. Specifically, the base station apparatus 10 configures a time length (in the case of FR2, 0 or 0.25 ms) of the measure gap timing advance to the user terminal 20. Measurement gap timing advance is an example of a parameter for adjusting the time position of the measurement gap.

A wide SCS, such as 480 kHz, is assumed to be used in the high frequency band of 52.6-71 GHz or 24.25-71 GHz as contemplated in this embodiment, as shown in Fig. 4(c).

In this case, the time length for SSB transmission is shortened. For example, in Fig. 4(c), if 16 SSBs out of the maximum 64 SSBs are transmitted, 16 SSBs can be received with 0.3125 ms. Accordingly, in the Example 1-3, the base station apparatus 10 can configure a gap length MGL (MGL < 1.5 ms) (e.g., MGL = 1 ms, 0.5 ms) shorter than 1.5 ms (the minimum gap length of the existing FR2) for the user terminal 20.

Specifically, for example, a gap length MGL (MGL < 1.5 ms) is added as a candidate gap length for either or both of the per-UE measurement gap and the per-FR2 measurement gap.

For example, in the above-described example (SCS=480 kHz, 16 SSBs in the cell to be measured), the base station apparatus 10 selects 0.5 ms from 0.5 ms, 1.5 ms, 3.5 ms, and 5.5 ms as a gap length when configuring the per-UE measurement gap or the per-FR2 measurement gap for the user terminal 20 and configures it. This allows the user terminal 20 to efficiently utilize time resources without taking the gap unnecessarily long.

In addition, the time length of the measurement gap timing advance (in the case of FR2, in the present specification, the time length is 0 or 0.25 ms) can be configured by the base station apparatus 10 to be an advance length MGTA (MGTA < 0.25 ms) shorter than 2.5 ms to the user terminal 20 (for example, MGTA = 0.125 ms).

Specifically, for example, the MGTA (MGTA < 0.25 ms) is added to 0 and 0.25 as an advance length candidate, and in the case of the above-described example (SCS = 480 kHz, 16SSBs), the base station apparatus 10 configures the MGTA (MGTA < 0.25 ms) to the user terminal 20. This allows the gap to be used efficiently without setting unnecessarily long advance length.

### <Example 1-4>

Example 1-4 is an example for CSI-RS-based measurements. The base station apparatus 10 according to the existing NR standard can configure the user terminal 20 with 96 CSI-RSs (if there are associated SSBs) or 64 CSI-RSs (if there are not associated SSBs) as CSI-RS (CSI-RS resource) for measurement at the maximum.

The maximum number of CSI-RSs used for CRI-RS-based measurements is greater than the existing defined values (96 or 64), since narrower beam operations are expected in the 52.6-71 GHz or 24.25-71 GHz frequency bands assumed in this embodiment.

On the other hand, at high frequency bands from 52.6 to 71 GHz or from 24.25 to 71 GHz, since complexity of the user terminal 20 increases, the maximum number of CSI-RSs used for CRI-RS-based measurements may be less than the existing defined value (96 or 64), in order to reduce complexity as much as possible.

For example, when the base station apparatus 10 causes the user terminal 20 to perform measurement of M CSI-RSs (where M is an integer larger than 96), the base station apparatus 10 configures configuration information (CSI-RS-Resource-Mobility) of M CSI-RS resources to the user terminal 20. The user terminal 20 receives CSI-RSs and performs the measurement according to the configuration.

According to Example 1 described above, the user terminal 20 can perform the measurement appropriately in the high frequency band.

### (Example 2)

In Example 2, in order to appropriately perform measurement in the high frequency band of 52.6 to 71 GHz or 24.25 to 71 GHz as assumed in the present embodiment, the user terminal 20 performs measurement based on a requirement for measurement changed from a requirement for measurement (RRM requirement) defined in the existing NR. Hereinafter, Examples 2-1, 2-2 and 2-3 will be described.

### <Example 2-1>

As described in Non-Patent Document 2, 9.2.3 and 9.3.3, the user terminal 20 following the existing specification must be able to perform SSB-based measurements on at least six cells and 24 SSBs in intra-frequency measurement for the frequency of FR2. The user terminal 20 according to the existing specification must be able to perform SSB-based measurements on at least four cells and 10 SSBs in the inter-frequency measurement for FR2.

In Example 2-1, the above requirement is relaxed when the frequency of 52.6-71 GHz or 24.25-71 GHz band is measurement target.

That is, for frequency bands 52.6-71 GHz or 24.25-71 GHz, the user terminal 20 should be able to perform SSB-based measurements for at least CM (where CM is an integer that satisfies CM<6) cells and SM (where SM is an integer that satisfies SM<24) SSBs in intra-frequency measurements. Also, for frequency bands 52.6 to 71 GHz or 24.25 to 71 GHz, the user terminal 20 should be able to perform SSB-based measurements for at least CM' (where CM' is an integer that satisfies CM'<4) cells and SM' (where SM' is an integer that satisfies SM'<10) SSBs in inter-frequency measurement.

In the above example, both the cell and SSB requirements are relaxed, but only cell requirements or SSB requirements may be relaxed.

### <Example 2-2>

As described in Non-Patent Document 1, the base station apparatus 10 according to the present embodiment can notify the user terminal 20 of deriveSSB-IndexFromCell by an RRC message. The deriveSSB-IndexFromCell is information indicating whether the user terminal 20 can derive an index of SSB transmitted by a neighboring cell using a timing of a serving cell whose frequency is the same as that of the neighboring cell (or a timing of a cell detected by the same frequency as the neighbor cell) . The deriveSSB-IndexFromCell is an example of a parameter indicating a synchronization state between cells.

The user terminal 20, which receives the deriveSSB-IndexFromCell set to true (which may be referred to as enabled), assumes that SFN and frame boundaries are aligned between the cells. That is, the index of the SSB of the neighbor cell can be derived based on the SFN and frame position of the serving cell.

In Non-Patent Document 2, 7.7 (deriveSSB-IndexFromCell tolerance), as described as "When deriveSSB-IndexFromCell is enabled, the UE assumes frame boundary alignment (including half frame, subframe and slot boundary alignment) across cells on the same frequency carrier is within a tolerance not worse than min(2 SSB symbols, 1 PDSCH symbol) and the SFNs of all cells on the same frequency carrier are the same", when the user terminal 20 following the existing specification receives deriveSSB-IndexFromCell in which true is set, the user terminal 20 assumes (determines) that the boundary shift between frames (including half frames, subframes, and slots) between cells using the same frequency carrier is within the tolerance, which is the smaller of the 2 SSB symbols and 1 PDSCH symbol.

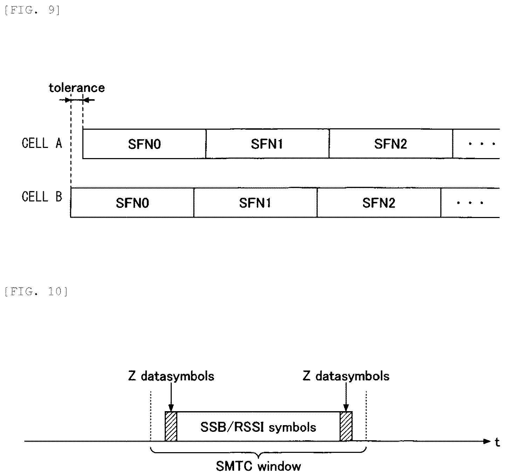

FIG. 9 illustrates the above image of tolerance between cells A and B using the same frequency carrier.

However, in this embodiment, which assumes the use of high frequency bands from 52.6 to 71 GHz or from 24.25 to 71 GHz, a high SCS, such as 480 kHz, is used, as described above, so that the time length of the 2 SSB symbol or 1 PDSCH symbol may be too short to satisfy the requirements under the existing provisions.

Accordingly, in this embodiment, when SCS greater than or equal to a certain SCS (e.g., 240 kHz) is used for both SSB and PDSCH, or for one of SSB and PDSCH, the user terminal 20, which is configured with deriveSSB-IndexFromCell set to true assumes that shift of boundaries of frames (including half frames, subframes, and slots) between cells using the same frequency carrier is within a range of time length (tolerance) of smaller one between X SSB symbols and Y PDSCH symbols. Note that, X is an integer greater than 2 and Y is an integer greater than 1.

As an example, suppose that both the SCS of SSB and the SCS of PDSCH are 480 kHz, for example, X=Y=4. As an example, if SCS of SSB = 480 kHz and SCS of PDSCH = 240 kHz, for example, X = 4 and Y = 2.

For example, suppose that the user terminal 20 assumes (determines) that X SSB symbols are allowed as boundary shifts between the serving cell (SCS = 480 kHz) and the neighbor cell (SCS = 480 kHz). In this case, for example, at the timing of slot #2 of SFN #3 in the serving cell, the user terminal 20 determines that the neighbor cell also receives slot #2 of SFN #3, and reads DMRS and payload of PBCH of the neghbor cell at that timing so that the SSB index of the neighbor cell at that timing can be known. In addition, since the user terminal 20 assumes that there is a shift of up to X SSB symbols, it is not necessary that the user terminal assumes transmission and reception of signals other than SSB for the serving cell in X symbols before and after SSB symbols of the serving cell.

The user terminal 20 can, for example, know state of a beam of the neghbor cell (whether SSB of a strong beam exists or not) by periodically grasping the SSB index in the neighbor cell based on the timing in the serving cell, and can determine whether or not to handover to the neighbor cell, and determine a beam to be used after handover.

### <Example 2-3>

When the user terminal 20 performs measurement of SSB of a neighbor cell or RSSI measurement for measuring signals including signals of a neighbor cell, since it is difficult for the user terminal 20 to perform data transmission and reception in the serving cell, limitation of scheduling availability is defined in Non-Patent Document 2, 9.2.5.3.

As defined in Non-Patent Document 2, 9.2.5.3, a user terminal 20 operating in accordance with existing provisions may not be required to transmit PUCCH/PUSCH/SRS and to receive PDCCH/PDSCH/TRS/CSI-RS for CQI in a SMTC window at an SSB symbol to be measured, an RSSI symbol to be measured, one data symbol prior to and one data symbol after successive SSB symbols/RSSI measurement symbols.

The "one data symbol" is provided in the above-mentioned period during which transmission and reception are not required, considering signal propagation time from neighbor cells.

That is, for example, a PUSCH transmitted to the user terminal 20 during the above-described period in which transmission and reception are not required is not scheduled from the base station apparatus 10. For example, the user terminal 20 is not scheduled to receive a PDSCH from the base station apparatus 10 during the above-described period in which transmission and reception are not required.

However, in this embodiment, which assumes use of high frequency bands from 52.6 to 71 GHz or from 24.25 to 71 GHz, a wide SCS, such as 480 kHz, is used, as previously described, resulting in a shorter time per symbol. Therefore, even if "One data symbol" is added before and after SSB symbols/RSSI measurement symbols as the period during which transmission and reception are unnecessary, the length of the period during which transmission and reception are unnecessary may be insufficient. That is, for example, an event may occur during which the user terminal 20 needs to receive (or transmit) PDSCH (or PUSCH) while performing measurement of an SSB from a neighbor cell. In this case, PDSCH reception (or PUSCH transmission) cannot be performed and data error may occur.

Thus, in Example 2-3, when an SCS greater than or equal to a certain SCS (e.g., 240 kHz) is used in both SSB and "PDCCH/PDSCH" or in SSB or PDCCH/PDSCH, the user terminal 20 does not need to transmit PUCCH/PUSCH/SRS and to receive PDCCH/PDSCH/TRS/CSI-RS for CQI in a SMTC window at an SSB symbol to be measured, an RSSI symbol to be measured, z data symbols prior to and z data symbols after successive SSB symbols/RSSI measurement symbols. This may be explained as described below.
- "UE is not expected to transmit PUCCH/PUSCH/SRS or receive PDCCH/PDSCH/TRS/CSI-RS for CQI on SSB/RSSI symbols to be measured, and on Z data symbols before each consecutive SSB/RSSI symbols to be measured and Z data symbols after each consecutive SSB/RSSI symbols to be measured within SMTC window duration for higher SCS cases".

The above higher SCS is, for example, an SCS larger than 240 kHz or 240 kHz. Z is an integer of 2 or more. For example, when SCS of SSB = 480 kHz and SCH of PDCCH/PDSCH = 480 kHz, Z = 2 may be used. In this case, Z=3 or Z=4 may be used. When Z=2, it is possible to minimize the period during which data cannot be sent and received, and to avoid interfering with SSB measurement of neighbor cells by data transmission and reception.

Fig. 10 is a diagram for explaining an operation of the Example 2-3. As shown in FIG. 10, the user terminal 20 does not need to transmit "PUCCH/PUSCH/SRS" (which may be collectively referred to as "data") and does not need to receive "PDCCH/PDSCH/TRS/CSI-RS for CQI" (which may be collectively referred to as "data") in a time interval consisting of consecutive SSB symbols to be measured, or consecutive RSSI symbols to be measured, and respective Z data symbols before and after the consecutive symbols.

According to the Example 2 described above, the requirement for measurement is relaxed, and complexity of the user terminal 20 for performing measurement in high frequency bands can be reduced.

### (Equipment configuration)

Next, a functional configuration example of the base station apparatus 10 and the user terminal 20 that perform the processing and operations described above will be described.

### <Base Station Apparatus 10>

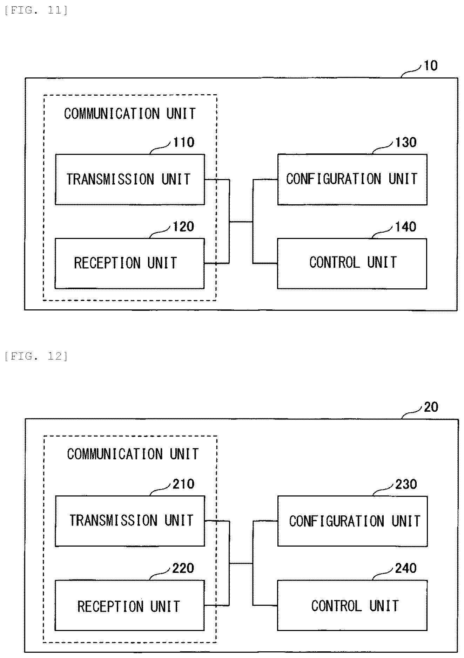

Fig. 11 is a diagram illustrating an example of a functional configuration of the base station apparatus 10. As shown in Fig. 11, the base station apparatus 10 includes a transmission unit 110, a reception unit 120, a configuration unit 130, and a control unit 140. The functional configuration shown in FIG. 11 is only one example. As long as the operation according to the embodiments of the present invention can be performed, the functional category and the name of the functional unit may be any one. The transmission unit 110 and the reception unit 120 may be collectively referred to as a communication unit.

The transmission unit 110 includes a function for generating a signal to be transmitted to the user terminal 20 side and transmitting the signal wirelessly. The reception unit 120 includes a function for receiving various signals transmitted from the user terminal 20 and acquiring, for example, information of a higher layer from the received signals. The transmission unit 110 has a function to transmit NR-PSS, NR-SSS, NR-PBCH, and DL/UL control signals, DCI by PDCCH, data by PDSCH, and the like to the user terminal 20.

The configuration unit 130 stores preconfigured configuration information and various configuration information to be transmitted to the user terminal 20 in the storage device provided by the configuration unit 130 and reads the preconfigured configuration information from the storage device as necessary.

The control unit 140 schedules DL reception or UL transmission of the user terminal 20 through the transmission unit 110. The control unit 140 includes a function for performing an LBT. A function unit related to signal transmission in the control unit 140 may be included in the transmission unit 110, and a function unit related to signal reception in the control unit 140 may be included in the receiving unit 120. The transmission unit 110 may be called a transmitter, and the reception unit 120 may be called a receiver.

### <User terminal 20>

Fig. 12 is a diagram illustrating an example of the functional configuration of the user terminal 20. As shown in Fig. 12, the user terminal 20 includes a transmission unit 210, a reception unit 220, a configuration unit 230, and a control unit 240. The functional configuration shown in FIG. 12 is only one example. As long as the operation according to the embodiments of the present invention can be performed, the functional category and the name of the functional unit may be any one. The transmission unit 210 and the reception unit 220 may be collectively referred to as a communication unit. The user terminal 20 may be referred to as a terminal.

The transmission unit 210 creates a transmission signal from the transmission data and wirelessly transmits the transmission signal. The reception unit 220 receives various signals wirelessly and acquires signals from higher layers from the received signal of the physical layer. The reception unit 220 has a function to receive the NR-PSS, NR-SSS, NR-PBCH, and DL/UL/SL control signals transmitted from the base station apparatus 10, DCI by the PDCCH, data by the PDSCH, and the like. For example, the transmission unit 210 may transmit PSCCH (Physical Sidelink Control Channel), PSSCH (Physical Sidelink Shared Channel), PSDCH (Physical Sidelink Discovery Channel), PSBCH (Physical Sidelink Broadcast Channel), etc. to another user terminal 20 as D2D communication, and the reception unit 120 may receive PSCCH, PSSCCH, PSDCH, PSDCH, or PSBCH, etc. from another user terminal 20.

The configuration unit 230 stores various configuration information received from the base station apparatus 10 or other user terminals by the reception unit 220 in a storage device provided by the configuration unit 230 and reads it from the storage device as necessary. The configuration unit 230 also stores preconfigured configuration information.

The control unit 240 performs control of the user terminal 20. The control unit 240 performs measurement described in Examples 1 and 2. The control unit 240 also includes a function for performing an LBT. The reception unit 220 may perform measurement described in Examples 1 and 2. A function unit related to signal transmission in the control unit 240 may be included in the transmission unit 210, and a function unit related to signal reception in the control unit 240 may be included in the reception unit 220. The transmission unit 210 may be referred to as a transmitter, and the reception unit 220 may be referred to as a receiver.

### [Summary]

In accordance with the present embodiment, terminals shown in the following items 1 to 6 are provided.

### (Item 1)

A terminal including:
a reception unit configured to receive, from a base station apparatus, configuration information of a time window for measurement based on an SSB; and
a control unit configured to perform measurement based on the SSB,
wherein the configuration information includes, as a time length of the time window, a time length selected from a plurality of time lengths including a time length shorter than a predetermined time length, and
wherein the control unit performs measurement based on the SSB within a time window of a time length included in the configuration information.

### (Item 2)

The terminal as described in item 1,
wherein the selected time length is a time length shorter than the predetermined time length, and the SSB that is a target of measurement is an SSB transmitted with a subcarrier spacing wider than a subcarrier spacing.

### (Item 3)

A terminal including:
a reception unit configured to receive a bitmap specifying slots that are targets of RSSI measurement; and
a control unit configured to measure RSSI,
wherein a bit length of the bitmap is longer than a predetermined number of bits, and each bit corresponds to a slot in which a subcarrier spacing wider than a subcarrier spacing is used, and
wherein the control unit is configured to measure RSSI in each slot specified by the bitmap.

### (Item 4)

A terminal including:
a reception unit configured to receive configuration information of a measurement gap; and
a control unit configured to perform measurement based on an SSB,
wherein the configuration information includes, as a time length of the measurement gap, a time length selected from a plurality of time lengths including a time length shorter than a predetermined time length, and
wherein the control unit performs measurement based on an SSB in a measurement gap of a time length included in the configuration information.

### (Item 5)

The terminal as described in item 4,
wherein the selected time length is a time length shorter than the predetermined time length, and the SSB that is a target of measurement is an SSB transmitted with a subcarrier spacing wider than a subcarrier spacing.

### (Item 6)

The terminal as described in any one of items 1-5,
wherein, in a time interval of consecutive symbols of measurement targets for the control unit, a predetermined number of data symbols right before the time interval, and a predetermined number of data symbols right after the time interval, the terminal does not perform data transmission and reception, and the predetermined number is an integer equal to or greater than 2.

Any of the first to sixth items provides a technique that allows the user terminal to properly perform measurements in the high frequency band in a wireless communication system.

### (Hardware configuration)

The block diagrams (Fig. 11 and Fig. 12) used in the description of the embodiment described above illustrate the block of functional unit. Such function blocks (configuration parts) are attained by at least one arbitrary combination of hardware and software. In addition, an attainment method of each of the function blocks is not particularly limited. That is, each of the function blocks may be attained by using one apparatus that is physically or logically coupled, by directly or indirectly (for example, in a wired manner, over the radio, or the like) connecting two or more apparatuses that are physically or logically separated and by using such a plurality of apparatuses. The function block may be attained by combining one apparatus described above or a plurality of apparatuses described above with software.

The function includes determining, determining, judging, calculating, computing, processing, deriving, investigating, looking up, ascertaining, receiving, transmitting, output, accessing, resolving, selecting, choosing, establishing, comparing, assuming, expecting, presuming, broadcasting, notifying, communicating, forwarding, configuring, reconfiguring, allocating (mapping), assigning, and the like, but is not limited thereto. For example, a function block (a configuration part) that functions transmission is referred to as the transmitting unit or the transmitter. As described above, the attainment method thereof is not particularly limited.

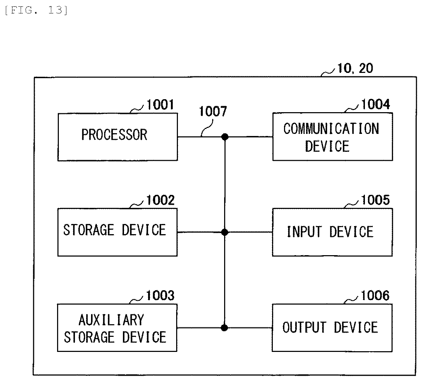

For example, the base station apparatus 10, the user terminal 20, and the like in one embodiment of this disclosure may function as a computer for performing the processing of a radio communication method of this disclosure. Fig. 13 is a diagram illustrating an example of a hardware configuration of the base station apparatus 10 and the user terminal 20 according to one embodiment of this disclosure. The base station apparatus 10 and the user terminal 20 described above may be physically configured as a computer apparatus including a processor 1001, a storage unit 1002, an auxiliary storage unit 1003, a communication unit 1004, an input unit 1005, an output unit 1006, a bus 1007, and the like.

Note that, in the following description, the word "apparatus" can be replaced with a circuit, a device, a unit, or the like. The hardware configuration of the base station apparatus 10 and the user terminal 20 may be configured to include one or a plurality of apparatuses illustrated in the drawings, or may be configured not to include a part of the apparatuses.

Each function of the base station apparatus 10 and the user terminal 20 is attained by reading predetermined software (a program) is read on hardware such as the processor 1001 and the storage unit 1002 such that the processor 1001 performs an operation, and by controlling the communication of the communication unit 1004 or by controlling at least one of reading and writing of data in the storage unit 1002 and the auxiliary storage unit 1003.

The processor 1001, for example, controls the entire computer by operating an operating system. The processor 1001 may be configured by a central processing unit (CPU) including an interface with respect to the peripheral equipment, a control apparatus, an operation apparatus, a register, and the like. For example, the control unit 140, the control unit 240, or the like, described above, may be attained by the processor 1001.

In addition, the processor 1001 reads out a program (a program code), a software module, data, and the like to the storage unit 1002 from at least one of the auxiliary storage unit 1003 and the communication unit 1004, and thus, executes various processing. A program for allowing a computer to execute at least a part of the operation described in the embodiment described above is used as the program. For example, the control unit 140 of the base station apparatus 10 illustrated in Fig. 9 may be attained by a control program that is stored in the storage unit 1002 and is operated by the processor 1001. In addition, for example, the control unit 240 of the user terminal 20 illustrated in Fig. 10 may be attained by a control program that is stored in the storage unit 1002 and is operated by the processor 1001. It has been described that the various processings described above are executed by one processor 1001, but the processings may be simultaneously or sequentially executed by two or more processors 1001. The processor 1001 may be mounted on one or more chips. Note that, the program may be transmitted from a network through an electric communication line.

The storage unit 1002 is a computer readable recording medium, and for example, may be configured of at least one of a read only memory (ROM), an erasable programmable ROM (EPROM), an electrically erasable programmable ROM (EEPROM), a random access memory (RAM), and the like. The storage unit 1002 may be referred to as a register, a cache, a main memory (a main storage unit), and the like. The storage unit 1002 is capable of retaining a program (a program code) that can be executed in order to implement a communication method according to one embodiment of this disclosure, a software module, and the like.

The auxiliary storage unit 1003 is a computer readable recording medium, and for example, may be configured of at least one of an optical disk such as a compact disc ROM (CD-ROM), a hard disk drive, a flexible disk, a magnetooptical disk (for example, a compact disc, a digital versatile disk, and a Blu-ray (Registered Trademark) disk), a smart card, a flash memory (for example, a card, a stick, a key drive), a floppy (Registered Trademark) disk, a magnetic strip, and the like. The auxiliary storage unit 1003 may be referred to as an auxiliary storage unit. The storage medium described above, for example, may be a database including at least one of the storage unit 1002 and the auxiliary storage unit 1003, a server, and a suitable medium.

The communication unit 1004 is hardware for performing communication with respect to the computer through at least one of a wire network and a radio network (a transmitting and receiving device), and for example, is also referred to as a network device, a network controller, a network card, a communication module, and the like. The communication unit 1004, for example, may be configured by including a high frequency switch, a duplexer, a filter, a frequency synthesizer, and the like, in order to attain at least one of frequency division duplex (FDD) and time division duplex (TDD). For example, a transmitting and receiving antenna, an amplifier, a transmitting and receiving unit, a transmission path interface, and the like may be attained by the communication unit 1004. In the transmitting and receiving unit, the transmitting unit and the receiving unit are mounted by being physically or logically separated.

The input unit 1005 is an input device for receiving input from the outside (for example, a keyboard, a mouse, a microphone, a switch, a button, a sensor, and the like). The output unit 1006 is an output device for implementing output with respect to the outside (for example, a display, a speaker, an LED lamp, and the like). Note that, the input unit 1005 and the output unit 1006 may be integrally configured (for example, a touch panel).

In addition, each of the apparatuses such as the processor 1001 and the storage unit 1002 may be connected by the bus 1007 for performing communication with respect to information. The bus 1007 may be configured by using a single bus, or may be configured by using buses different for each of the apparatuses.

In addition, the base station apparatus 10 and the user terminal 20 may be configured by including hardware such as a microprocessor, a digital signal processor (DSP), an application specific integrated circuit (ASIC), a programmable logic device (PLD), and a field programmable gate array (FPGA), and a part or all of the respective function blocks may be attained by the hardware. For example, the processor 1001 may be mounted by using at least one of the hardwares.

### (Supplement to Embodiment)

As described above, the embodiment of the invention has been described, but the disclosed invention is not limited to the embodiment, and a person skilled in the art will understand various modification examples, correction examples, alternative examples, substitution examples, and the like. Specific numerical examples have been described in order to facilitate the understanding of the invention, but the numerical values are merely an example, and any appropriate values may be used, unless otherwise specified. The classification of the items in the above description is not essential to the invention, and the listings described in two or more items may be used by being combined, as necessary, or the listing described in one item may be applied to the listing described in another item (insofar as there is no contradiction) . A boundary between the functional parts or the processing parts in the function block diagram does not necessarily correspond to a boundary between physical components. The operations of a plurality of functional parts may be physically performed by one component, or the operation of one functional part may be physically performed by a plurality of components. In a processing procedure described in the embodiment, a processing order may be changed, insofar as there is no contradiction. For the convenience of describing the processing, the base station apparatus 10 and the user terminal 20 have been described by using a functional block diagram, but such an apparatus may be attained by hardware, software, or a combination thereof. Each of software that is operated by a processor of the base station apparatus 10 according to the embodiment of the invention and software that is operated by a processor of the user terminal 20 according to the embodiment of the invention may be retained in a random access memory (RAM), a flash memory, a read only memory (ROM), an EPROM, an EEPROM, a register, a hard disk (HDD), a removable disk, a CD-ROM, a database, a server, and other suitable recording media.

In addition, the notification of the information is not limited to the aspect/embodiment described in this disclosure, and may be performed by using other methods. For example, the notification of the information may be implemented by physical layer signaling (for example, downlink control information (DCI) and uplink control information (UCI)), higher layer signaling (for example, radio resource control (RRC) signaling, medium access control (MAC) signaling, broadcast information (a master information block (MIB)), a system information block (SIB)), other signals, or a combination thereof. In addition, the RRC signaling may be referred to as an RRC message, and for example, may be an RRC connection setup message, an RRC connection reconfiguration message, and the like.

Each aspect/embodiments described in this disclosure may be applied to a system using long term evolution (LTE), LTE-advanced (LTE-A), SUPER 3G, IMT-advanced, a 4th generation mobile communication system (4G), a 5th generation mobile communication system (5G), future radio access (FRA), new radio (NR), W-CDMA (Registered Trademark), GSM (Registered Trademark), CDMA2000, an ultra mobile broadband (UMB), IEEE 802.11 (Wi-Fi (Registered Trademark)), IEEE 802.16 (WiMAX (Registered Trademark)), IEEE 802.20, an ultra-wideband (UWB), Bluetooth (Registered Trademark), and other suitable systems and a next-generation system that is expanded on the basis thereof. In addition, a combination of a plurality of systems (for example, a combination of at least one of LTE and LTE-A and 5G, and the like) may be applied.

In the processing procedure, the sequence, the flowchart, and the like of each aspect/embodiment described herein, the order may be changed, insofar as there is no contradiction. For example, in the method described in this disclosure, the elements of various steps are presented by using an exemplary order, but are not limited to the presented specific order.

Here, a specific operation that is performed by the base station apparatus 10 may be performed by an upper node, in accordance with a case. In a network provided with one or a plurality of network nodes including the base station apparatus 10, it is obvious that various operations that are performed in order for communication with respect to the user terminal 20 can be performed by at least one of the base station apparatus 10 and network nodes other than the base station apparatus 10 (for example, MME, S-GW, or the like is considered as the network node, but the network node is not limited thereto) . In the above description, a case is exemplified in which the number of network nodes other than the base station apparatus 10 is 1, but a plurality of other network nodes may be combined (for example, the MME and the S-GW).

The information, the signal, or the like described in this disclosure can be output to a lower layer (or the higher layer) from the higher layer (or the lower layer). The information, the signal, or the like may be input and output through a plurality of network nodes.

The information or the like that is input and output may be retained in a specific location (for example, a memory), or may be managed by using a management table. The information or the like that is input and output can be subjected to overwriting, updating, or editing. The information or the like that is output may be deleted. The information or the like that is input may be transmitted to the other apparatuses.

Judgment in this disclosure may be performed by a value represented by 1 bit (0 or 1), may be performed by a truth-value (Boolean: true or false), or may be performed by a numerical comparison (for example, a comparison with a predetermined value) .

Regardless of whether the software is referred to as software, firmware, middleware, a microcode, and a hardware description language, or is referred to as other names, the software should be broadly interpreted to indicate a command, a command set, a code, a code segment, a program code, a program, a sub-program, a software module, an application, a software application, a software package, a routine, a sub-routine, an object, an executable file, an execution thread, a procedure, a function, and the like.

In addition, software, a command, information, and the like may be transmitted and received through a transmission medium. For example, in a case where the software is transmitted from a website, a server, or other remote sources by using at least one of a wire technology (a coaxial cable, an optical fiber cable, a twisted pair, a digital subscriber line (DSL), and the like) and a radio technology (an infrared ray, a microwave, and the like), at least one of the wire technology and the radio technology is included in the definition of the transmission medium.

The information, the signal, and the like described in this disclosure may be represented by using any of various different technologies. For example, the data, the command, the command, the information, the signal, the bit, the symbol, the chip, and the like that can be referred to through the entire description described above may be represented by a voltage, a current, an electromagnetic wave, a magnetic field or magnetic particles, an optical field or a photon, or an arbitrary combination thereof.

Note that, the terms described in this disclosure and the terms necessary for understanding this disclosure may be replaced with terms having the same or similar meaning. For example, at least one of the channel and the symbol may be a signal (signaling). In addition, the signal may be a message. In addition, a component carrier (CC) may be referred to as a carrier frequency, a cell, a frequency carrier, and the like.

The terms "system" and "network" used in this disclosure are interchangeably used.

In addition, the information, the parameter, and the like described in this disclosure may be represented by using an absolute value, may be represented by using a relative value from a predetermined value, or may be represented by using another corresponding information. For example, a radio resource may be indicated by an index.

The names used in the parameters described above are not a limited name in any respect. Further, expressions or the like using such parameters may be different from those explicitly disclosed in this disclosure. Various channels (for example, PUSCH, PUCCH, PDCCH, and the like) and information elements can be identified by any suitable name, and thus, various names that are allocated to such various channels and information elements are not a limited name in any respect.

In this disclosure, the terms "base station (BS)", "radio base station", "base station apparatus", "fixed station", "NodeB", "eNodeB (eNB)", "gNodeB (gNB)", "access point", "transmission point", "reception point", "transmission and reception point", "cell", "sector", "cell group", "carrier", "component carrier", and the like can be interchangeably used. The base station may be referred to by a term such as a macrocell, a small cell, a femtocell, and a picocell.

The base station is capable of accommodating one or a plurality of (for example, three) cells. In a case where the base station accommodates a plurality of cells, the entire coverage area of the base station can be classified into a plurality of small areas, and each of the small areas is capable of providing communication service by a base station sub-system (for example, an indoor type small base station (a remote radio head (RRH)). The term "cell" or "sector" indicates a part of the coverage area or the entire coverage area of at least one of the base station and the base station sub-system that perform the communication service in the coverage.

In this disclosure, the terms "mobile station (MS)", "user terminal", "user equipment (UE)", and "terminal" can be interchangeably used.

The mobile station may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a terminal, a wireless terminal, a remote terminal, a handset, a user agent, a mobile client, a client, or other suitable terms, by a person skilled in the art.

At least one of the base station and the mobile station may be referred to as a transmitting apparatus, a receiving apparatus, a communication unit, and the like. Note that, at least one of the base station and the mobile station may be a device that is mounted on a mobile object, the mobile object itself, or the like. The mobile object may be a vehicle (for example, a car, an airplane, and the like), may be a mobile object that is moved in an unmanned state (for example, a drone, an autonomous driving car, and the like), or may be a (manned or unmanned) robot. Note that, at least one of the base station and the mobile station also includes an apparatus that is not necessarily moved at the time of a communication operation. For example, at least one of the base station and the mobile station may be an internet of things (IoT) device such as a sensor.

In addition, the base station apparatus in this disclosure may be replaced with the user terminal. For example, each aspect/embodiment of this disclosure may be applied to a configuration in which communication between the base station apparatus and the user terminal is replaced with communication in a plurality of user terminals 20 (for example, may be referred to as device-to-device (D2D), vehicle-to-everything (V2X), and the like). In this case, the function of the base station apparatus 10 described above may be provided in the user terminal 20. In addition, the words "up", "down", and the like may be replaced with words corresponding to the communication between the terminals (for example, "side"). For example, an up channel, a down channel, and the like may be replaced with a side channel.

Similarly, the user terminal in this disclosure may be replaced with the base station apparatus. In this case, the function of the user terminal described above may be provided in the base station apparatus.

The terms "determining" and "determining" used in this disclosure may involve diverse operations. "Determining" and "determining", for example, are capable of including "determining" and "determining" with respect to judging, calculating, computing, processing, deriving, investigating, looking up (search, inquiry) (for example, looking up in a table, a database, or another data structure), and ascertaining, and the like. In addition, "determining" and "determining" are capable of including "determining" and "determining" with respect to receiving (for example, receiving information), transmitting (for example, transmitting information), input, output, and accessing (for example, accessing data in a memory), and the like. In addition, "determining" and "determining" are capable of including "determining" and "determining" with respect to resolving, selecting, choosing, establishing, comparing, and the like. That is, "determining" and "determining" are capable of including "determining" and "determining" with respect to any operation. In addition, "determining (determining)" may be replaced with "assuming", "expecting", "considering", and the like.

The terms "connected" and "coupled", or any modification thereof indicate any direct or indirect connection or couple in two or more elements, and are capable of including a case where there are one or more intermediate elements between two elements that are "connected" or "coupled" to each other. The couple or connection between the elements may be physical couple or connection, may be logical couple or connection, or may be a combination thereof. For example, the "connection" may be replaced with "access". In the case of being used in this disclosure, it is possible to consider that two elements are "connected" or "coupled" to each other by using at least one of one or more electric wires, cables, and print electric connection, and as some non-limiting and non-inclusive examples, by using electromagnetic energy having a wavelength of a radio frequency domain, a microwave domain, and an optical (visible and invisible) domain, and the like.

The reference signal can also be abbreviated as RS, and may be referred to as pilot on the basis of a standard to be applied.

The description "on the basis of" that is used in this disclosure does not indicate "only on the basis of", unless otherwise specified. In other words, the description "on the basis of" indicates both "only on the basis of" and "at least on the basis of".

Any reference to elements using the designations "first," "second," and the like, used in this disclosure, does not generally limit the amount or the order of such elements. Such designations can be used in this disclosure as a convenient method for discriminating two or more elements. Therefore, a reference to a first element and a second element does not indicate that only two elements can be adopted or the first element necessarily precedes the second element in any manner.

"Means" in the configuration of each of the apparatuses described above may be replaced with "unit", "circuit", "device", and the like.

In this disclosure, in a case where "include", "including", and the modification thereof are used, such terms are intended to be inclusive, as with the term "comprising". Further, the term "or" that is used in this disclosure is not intended to be exclusive-OR.

A radio frame may be configured of one or a plurality of frames in a time domain. Each of one or a plurality of frames in the time domain may be referred to as a subframe . The subframe may be further configured of one or a plurality of slots in the time domain. The subframe may be a fixed time length (for example, 1 ms) that does not depend on numerology.

The numerology may be a communication parameter to be applied to at least one of the transmission and the reception of a certain signal or channel. The numerology, for example, may indicate at least one of subcarrier spacing (SCS), a bandwidth, a symbol length, a cyclic prefix length, a transmission time interval (TTI), the number of symbols per TTI, a radio frame configuration, specific filtering processing that is performed by the transceiver in a frequency domain, specific windowing processing that is performed by the transceiver in a time domain, and the like.

The slot may be configured of one or a plurality of symbols (an orthogonal frequency division multiplexing (OFDM) symbol, a single carrier frequency division multiple access (SC-FDMA) symbol, and the like) in a time domain. The slot may be time unit based on the numerology.

The slot may include a plurality of mini slots. Each of the mini slots may be configured of one or a plurality of symbols in the time domain. In addition, the mini slot may be referred to as a subslot. The mini slot may be configured of symbols of which the number is less than that of the slot. PDSCH (or PUSCH) to be transmitted in time unit greater than the mini slot may be referred to as a PDSCH (or PUSCH) mapping type A. PDSCH (or PUSCH) to be transmitted by using the mini slot may be referred to as a PDSCH (or PUSCH) mapping type B.

All of the radio frame, the subframe, the slot, the mini slot, and the symbol represent time unit at the time of transmitting a signal. Other designations respectively corresponding to the radio frame, the subframe, the slot, the mini slot, and the symbol may be used.

For example, one subframe may be referred to as a transmission time interval (TTI), a plurality of consecutive subframes may be referred to as TTI, or one slot or one mini slot may be referred to as TTI. That is, at least one of the subframe and TTI may be a subframe (1 ms) in the existing LTE, may be a period shorter than 1 ms (for example, 1 to 13 symbols), or may be a period longer than 1 ms. Note that, unit representing TTI may be referred to as a slot, a mini slot, and the like, but not a subframe. Also, one slot may be called a unit time. The unit time may be different in each cell according to numerology.

Here, TTI, for example, indicates minimum time unit of scheduling in radio communication. For example, in an LTE system, the base station performs scheduling for allocating a radio resource (a frequency bandwidth, transmission power, and the like that can be used in each of the user terminals 20) in TTI unit, with respect to each of the terminals 20. Note that, the definition of TTI is not limited thereto.

TTI may be transmission time unit of a data packet (a transport block), a code block, a codeword, and the like that are subjected to channel coding, or may be processing unit of scheduling, link adaptation, and the like. Note that, when TTI is applied, a time zone in which the transport block, the code block, the codeword, and the like are actually mapped (for example, the number of symbols) may be shorter than TTI.

Note that, in a case where one slot or one mini slot is referred to as TTI, one or more TTIs (that is, one or more slots or one or more mini slots) may be the minimum time unit of the scheduling. In addition, the number of slots (the number of mini slots) configuring the minimum time unit of the scheduling may be controlled.

TTI having a time length of 1 ms may be referred to as a common TTI (TTI in LTE Rel.8-12), a normal TTI, a long TTI, a common subframe, a normal subframe, a long subframe, a slot, and the like. TTI shorter than the common TTI may be referred to as a shortened TTI, a short TTI, a partial TTI (or a fractional TTI), a shortened subframe, a short subframe, a mini slot, a subslot, a slot, and the like.

Note that, the long TTI (for example, the common TTI, the subframe, and the like) may be replaced with TTI having a time length of greater than or equal to 1 ms, and the short TTI (for example, the shortened TTI and the like) may be replaced with TTI having a TTI length of less than a TTI length of the long TTI and greater than or equal to 1 ms.

The resource block (RB) is resource allocation unit of the time domain and the frequency domain, and may include one or a plurality of consecutive subcarriers in the frequency domain. The number of subcarriers included in RB may be the same regardless of the numerology, or for example, may be 12. The number of subcarriers included in RB may be determined on the basis of the numerology.

In addition, the time domain of RB may include one or a plurality of symbols, or may be the length of one slot, one mini slot, one subframe, or one TTI. One TTI, one subframe, and the like may be respectively configured of one or a plurality of resource blocks.

Note that, one or a plurality of RBs may be referred to as a physical resource block (physical RB: PRB), a sub-carrier group (SCG), a resource element group (REG), a PRB pair, a RB pair, and the like.

In addition, the resource block may be configured of one or a plurality of resource elements (RE). For example, one RE may be a radio resource domain of one subcarrier and one symbol.

A bandwidth part (BWP) (may be referred to as a part bandwidth or the like) may represent a subset of consecutive common resource blocks (common RBs) for certain numerology, in a certain carrier. Here, the common RB may be specified by an index of RB based on a common reference point of the carrier. PRB may be defined by a certain BWP, and may be numbered within BWP.

BWP may include BWP for UL (UL BWP) and BWP for DL (DL BWP) . In UE, one or a plurality of BWPs may be configured within one carrier.

At least one of the configured BWPs may be active, and it may not assumed that the UE transmits and receives a predetermined signal/channel out of the active BWP. Note that, the "cell", the "carrier", and the like in this disclosure may be replaced with "BWP".

The structure of the radio frame, the subframe, the slot, the mini slot, the symbol, and the like, described above, is merely an example. For example, the configuration of the number of subframes included in the radio frame, the number of slots per a subframe or a radio frame, the number of mini slots included in the slot, the number of symbols and RBs included in the slot or a mini slot, the number of subcarriers included in RB, the number of symbols in TTI, a symbol length, a cyclic prefix (CP) length, and the like can be variously changed.

In this disclosure, for example, in a case where articles such as a, an, and the are added by translation, this disclosure may include a case where nouns following the articles are in the plural.

In this disclosure, the term "A and B are different" may indicate "A and B are different from each other". Note that, the term may indicate "A and B are respectively different from C". The terms "separated", "coupled", and the like may be interpreted as with "being different".

Each aspect/embodiment described in this disclosure may be independently used, may be used by being combined, or may be used by being switched in accordance with execution. In addition, the notification of predetermined information (for example, the notification of "being X") is not limited to being performed explicitly, and may be performed implicitly (for example, the notification of the predetermined information is not performed).

As described above, this disclosure has been described in detail, but it is obvious for a person skilled in the art that this disclosure is not limited to the embodiment described in this disclosure. This disclosure can be implemented as corrected and changed modes without departing from the spirit and scope of this disclosure defined by the description of the claims. Therefore, the description in this disclosure is for illustrative purposes and does not have any limiting meaning with respect to this disclosure.

### EXPLANATIONS OF LETTERS OR NUMERALS

- 10: BASE STATION APPARATUS
- 110: TRANSMISSION UNIT
- 120: RECEPTION UNIT
- 130: CONFIGURATION UNIT
- 140: CONTROL UNIT
- 20: USER TERMINAL
- 210: TRANSMISSION UNIT
- 220: RECEPTION UNIT
- 230: CONFIGURATION UNIT
- 240: CONTROL UNIT
- 1001: PROCESSOR
- 1002: STORAGE UNIT
- 1003: AUXILIARY STORAGE UNIT
- 1004: COMMUNICATION UNIT
- 1005: INPUT UNIT
- 1006: OUTPUT UNIT

## Claims

1. A terminal comprising:
a reception unit configured to receive, from a base station apparatus, configuration information of a time window for measurement based on an SSB; and
a control unit configured to perform measurement based on the SSB,
wherein the configuration information includes, as a time length of the time window, a time length selected from a plurality of time lengths including a time length shorter than a predetermined time length, and
wherein the control unit performs measurement based on the SSB within a time window of a time length included in the configuration information.

2. The terminal as claimed in claim 1,
wherein the selected time length is a time length shorter than the predetermined time length, and the SSB that is a target of measurement is an SSB transmitted with a subcarrier spacing wider than a subcarrier spacing.

3. A terminal comprising:
a reception unit configured to receive a bitmap specifying slots that are targets of RSSI measurement; and
a control unit configured to measure RSSI,
wherein a bit length of the bitmap is longer than a predetermined number of bits, and each bit corresponds to a slot in which a subcarrier spacing wider than a subcarrier spacing is used, and
wherein the control unit is configured to measure RSSI in each slot specified by the bitmap.

4. A terminal comprising:
a reception unit configured to receive configuration information of a measurement gap; and
a control unit configured to perform measurement based on an SSB,
wherein the configuration information includes, as a time length of the measurement gap, a time length selected from a plurality of time lengths including a time length shorter than a predetermined time length, and
wherein the control unit performs measurement based on an SSB in a measurement gap of a time length included in the configuration information.

5. The terminal as claimed in claim 4,
wherein the selected time length is a time length shorter than the predetermined time length, and the SSB that is a target of measurement is an SSB transmitted with a subcarrier spacing wider than a subcarrier spacing.

6. The terminal as claimed in any one of claims 1-5,
wherein, in a time interval of consecutive symbols of measurement targets for the control unit, a predetermined number of data symbols right before the time interval, and a predetermined number of data symbols right after the time interval, the terminal does not perform data transmission and reception, and the predetermined number is an integer equal to or greater than 2.
